# EUROPEAN PATENT SPECIFICATION

(11) **EP 2 098 805 B1**
(45) Date of publication and mention of the grant of the patent: **08.08.2012**
(21) Application number: 09153994.0
(22) Date of filing: 27.02.2009
(51) Int. Cl.: F24J 2/48

(54) **Solar collector and solar heating system using same**
Sonnenkollektor und Sonnenheizsystem, das diesen verwendet
Collecteur solaire et système de chauffage solaire utilisant celui-ci

(30) Priority: 11.04.2008 CN 200810066571; 07.03.2008 CN 200810065792; 11.04.2008 CN 200810066576; 18.04.2008 CN 200810066751; 18.04.2008 CN 200810066752
(43) Date of publication of application: 09.09.2009
(73) Proprietor: Tsing Hua University, Haidian District Beijing City (CN); Hon Hai Precision Industry Co., Ltd., Tu-cheng City, Taipei Hsien (TW)
(72) Inventor: Liu, Peng, Haidian District (CN); Chen, Pi-Jin, Haidian District (CN); Jiang, Kai-Li, Haidian District (CN); Wang, Ding, Haidian District (CN); Liu, Chang-Hong, Haidian District (CN); Fan, Shou-Shan, Haidian District (CN); Liu, Liang, Haidian District (CN)
(74) Representative: Gray, John James

(56) References cited:
- EP-A1- 1 529 857
- WO-A1-2007/015670
- DE-A1-102006 039 804
- DE-C1- 19 704 323
- US-A- 4 822 120
- US-A1- 2006 048 808

## Description

The present disclosure relates to solar collectors employed with carbon nanotubes.

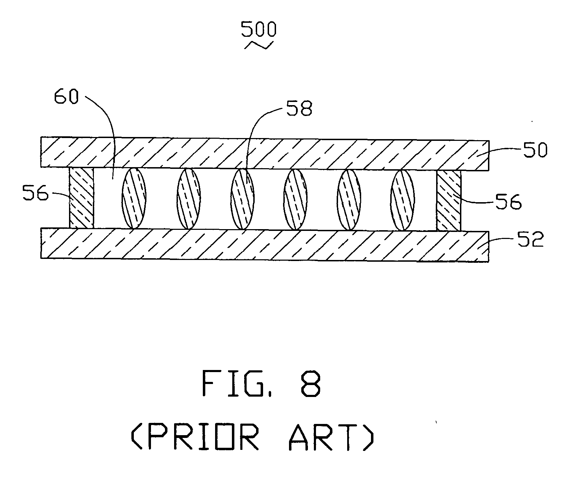

Generally, solar collectors can be divided into two typical types: pipe solar collectors and flat plate solar collectors. In many practical applications, it has been demonstrated that the most efficient and least expensive solar collector is the flat plate collector. Referring to Fig 8, a typical flat plate collector 500, according to the prior art, includes a substrate 52, a sidewall 56 arranged on the periphery of the substrate 52, and a transparent cover 50 fixed on the sidewall 56 opposite to the substrate 52. A sealed chamber 60 is formed between the substrate 52 and the transparent cover 50. A number of supporters 58 are dispersed in the sealed chamber 60 at random. The transparent cover 50 is used for passage of light and is made of glass, plastic and other transparent materials. The substrate 52 is made of absorbing materials, such as copper, aluminum, or the likes. In use, the light enters the collector 500 through the cover 50, and is absorbed by the substrate 52. Thus, heat is generated by the substrate 52 and is transferred to a storage apparatus (not shown).

Actually, the traditional thin films made of absorbing materials have very high absorbing efficiency. The traditional solar collector 500 can't adopt the thin film technology because the film is difficult to evaporate on the large area substrate. As such, the heat absorbing efficiency of the solar collector 500 is limited by the material it used. Therefore, the efficiency of the collector 500 is limited accordingly.

Another type of solar collectors is known from document WO 2007/015670 where a solar absorber is disclosed which is made of a substrate covered by a first, a second and a third layer and where the first and the second layer comprise nickel nano-particles embedded in a dielectric matrix of alumina.

What is needed, therefore, is to provide a solar collector and a solar heating system using the solar collector that can overcome the above-described shortcomings.

Many aspects of the present solar collector can be better understood with references to the following drawings. The components in the drawings are not necessarily drawn to scale, the emphasis instead being placed upon clearly illustrating the principles of the present solar collector.

FIG.1 is a schematic, side view of a solar heating system having a carbon nanotube structure in accordance with the first embodiment.

FIG.2 is a schematic, top view of a solar collector used in the heating system of FIG. 1.

FIG.3 is a Scanning Electron Microscope (SEM) image of a drawn carbon nanotube film.

FIG.4 is a schematic view of a carbon nanotube segment of FIG. 3.

FIG.5 is an image of a flocculated carbon nanotube film.

FIG.6 is a graph showing a relationship between the light-absorbing ratio and the thickness of the carbon nanotube structure.

FIG. 7 is an absorption spectroscopy of the carbon nanotube structure.

FIG. 8 is a schematic view of a typical solar collector according to the prior art.

Corresponding reference characters indicate corresponding parts throughout the several views. The exemplifications set out herein illustrate at least one embodiment of the solar collector and the solar heating system using same, in at least one form, and such exemplifications are not to be construed as limiting the scope of the invention in any manner.

References will now be made to the drawings to describe, in detail, embodiments of the solar collector.

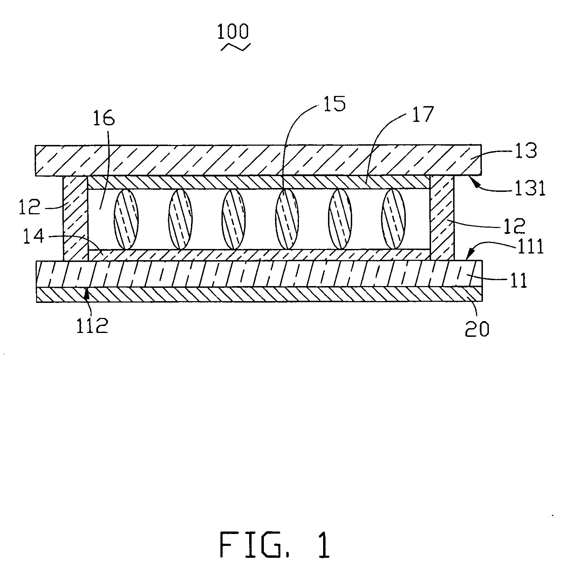

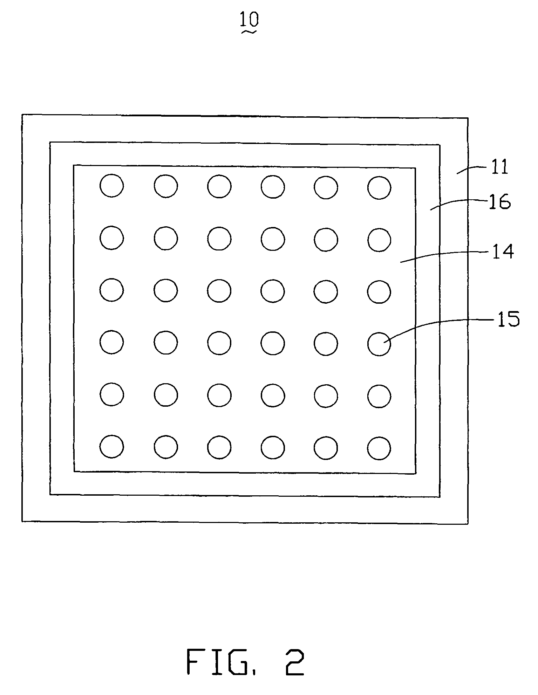

Referring to FIGS. 1-2, a solar heating system 100 according to a first embodiment is shown. The solar heating system 100 includes a solar collector 10 and a heat storage apparatus 20 connected to the solar collector 10. The heat storage apparatus 20 is configured for storing heat generated by the solar collector 10.

The solar collector 10 includes a substrate 11, a sidewall 12, a transparent cover 13, a heat-absorbing layer 14 and a number of supporters 15. The substrate 11 has a top surface 111 and a bottom surface 112 opposite to the top surface 111. The transparent cover 13 has a surface 131. The sidewall 12 is mounted on the periphery of the top surface 111 of the substrate 11. The transparent cover 13 is attached on the sidewall 12 opposite to the substrate 11 to form a sealed chamber 16 in cooperation with the sidewall 12 and the substrate 11. The heat-absorbing layer 14 is disposed on the top surface 111 of the substrate 11 and received in the sealed chamber 16.

The material of the substrate 11 can be selected from one of heat-conducting materials, such as metal, glass or polymer. A thickness of the substrate 11 can be in a range from about 100 µm to about 5 mm. The shape of the substrate 11 is not limited; and may be triangular, hexagonal, and so on.

The transparent cover 13 may be a solar radiation access window. The material of the transparent cover 13 can be selected from a group consisting of glass, plastic, transparent porcelain, polymer and other transparent materials. A thickness of the transparent cover 13 can be in a range from about 100 µm to about 5 mm. The shape of the transparent cover 13 is not limited, and may be triangle, hexagon or quadrangle.

The sidewall 12 is configured for supporting the transparent cover 13, and then formed the sealed chamber 16 between the transparent cover 13 and the substrate 11. The sidewall 12 is made of materials selected from glass, plastics, polymers, and combination thereof. A height of the sidewall 12 is not limited. A thickness of the sidewall 12 can be in a range from about 100 µm to about 500 µm. In the present embodiment, the thickness of the sidewall 12 is in a range from about 150 µm to about 250 µm.

The sealed chamber 16 may be a vacuum chamber or an atmospheric chamber filled with thermal-insulating materials. In the present embodiment, the sealed chamber 16 is an atmospheric chamber, and the thermal-insulating materials filled therein can be transparent foam materials, such as transparent foam rubber, transparent foam plastics, or the like. The sealed chamber 16 can also be filled with thermal-insulating gas, such as nitrogen, and/or inert gases for preventing the carbon nanotubes from oxidizing.

The heat-absorbing layer 14 includes a carbon nanotube structure. A thickness of the CNT structure is in a range from about 0.2 µm to about 2 mm. The carbon nanotube structure includes a plurality of carbon nanotubes (CNT) dispersed uniformly therein. Further, the carbon nanotube structure includes at least a carbon nanotube film. The carbon nanotube films in the carbon nanotube structure can be arranged side by side. Two or more carbon nanotube films can be overlapped or stacked with each other. The CNTs of the carbon nanotube structure can be arranged orderly, forming a ordered CNT film. Alternatively, the CNTs of the carbon nanotube structure can be arranged disorderly, forming a disordered CNT film. In the ordered CNT film, the carbon nanotubes are primarily oriented along a same direction in the CNT film and substantially parallel to a surface of the carbon nanotube film. In the disordered CNT film, the carbon nanotubes are entangled with each other or arranged in an isotropic manner. The isotropic carbon nanotubes are substantially parallel to a surface of the carbon nanotube film. Different stratums/layers of films can have the carbon nanotubes offset from the carbon nanotubes in other films.

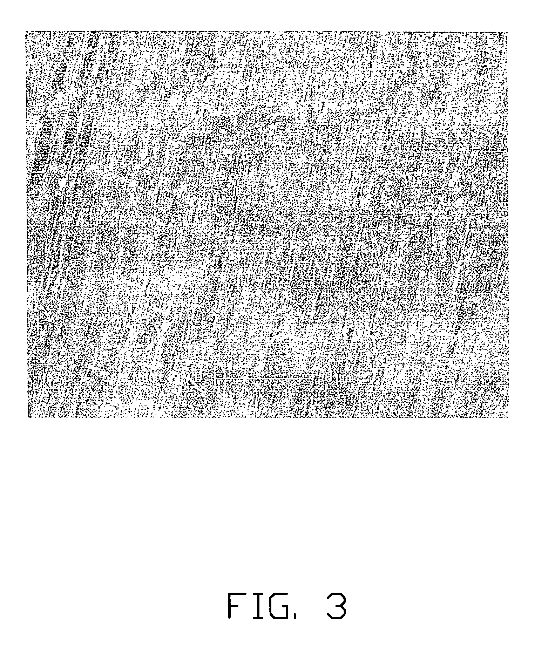

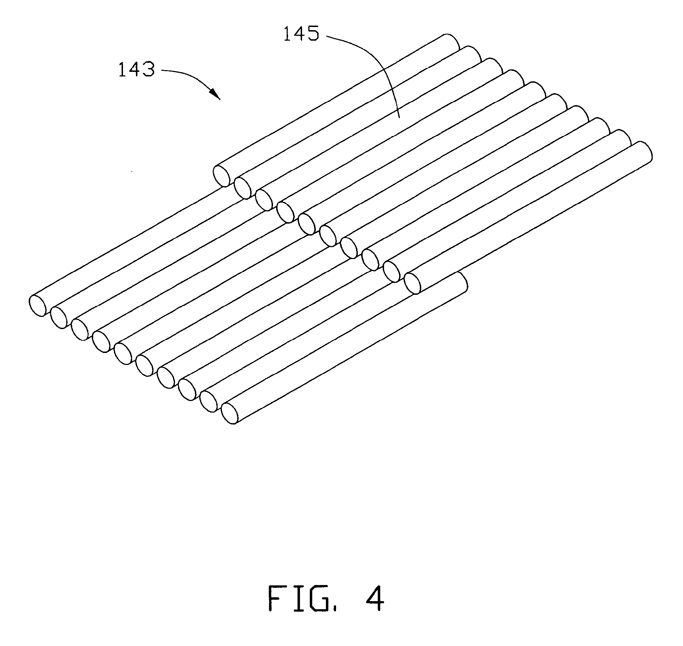

Referring to FIG. 3, a CNT film not in accordance with the invention can be formed by been drawn from a CNT array, forming a drawn CNT film. The drawn carbon nanotube film includes a plurality of successive carbon nanotubes joined end to end and are aligned substantially in the same direction. The majority of carbon nanotubes are arranged along a primary direction. However, the orientation of some of the nanotubes may vary. Referring to FIG. 4, the drawing carbon nanotube film comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube segment 143 are also oriented along a preferred orientation.

The drawing carbon nanotube film is drawn from a carbon nanotube array. The carbon nanotubes are combined by van der Waals attractive force. The drawing carbon nanotube film adhesive because the carbon nanotubes in the carbon nanotube array have relatively large specific areas. The thickness of the drawing carbon nanotube film ranges from about 0.5 nm to about 100 µm. The carbon nanotube structure 16 can include layers of drawing carbon nanotube film stacked on each other. The angle between the aligned directions of carbon nanotubes in two adjacent layers can be set as desired.

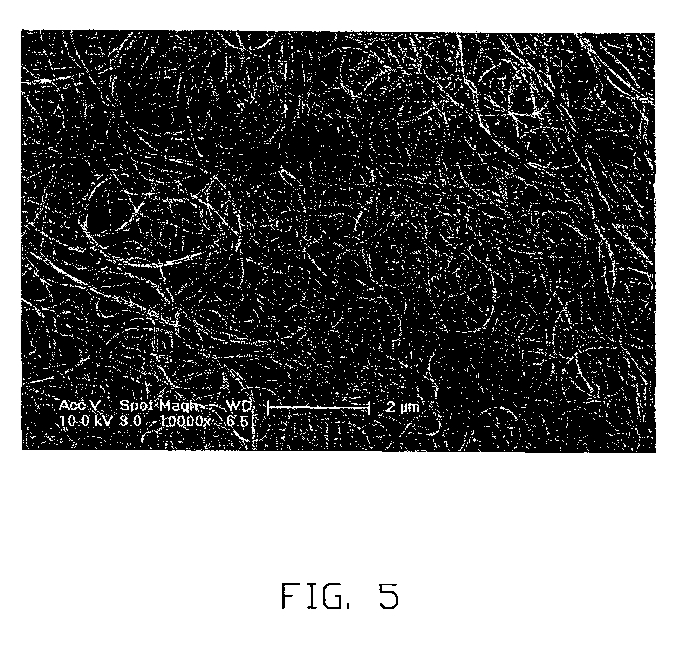

Referring to FIG. 5, a further CNT film not in accordance with the invention can be formed by a flocculation process, forming a flocculated CNT film. The flocculating carbon nanotube film is a carbon nanotube film with a plurality carbon nanotubes therein that are isotropic, uniformly arranged, disordered, and are entangled together. There is a plurality of micropores distributed in the flocculating carbon nanotube film, as such, a specific area of the flocculating carbon nanotube film is extremely large. The thickness of the pressing carbon nanotube film is ranged from about 1 µm to about 1 mm.

The CNT film in accordance with the invention is formed by pressing a carbon nanotube array, forming a pressed CNT film. The pressed carbon nanotube film can be a free-standing carbon nanotube film. The carbon nanotubes in the pressed carbon nanotube film are arranged along a same direction or arranged along different directions. The carbon nanotubes in the pressed carbon nanotube film can rest upon each other. Adjacent carbon nanotubes are attracted to each other and combined by van der Waals attractive force. An angle between a primary alignment direction of the carbon nanotubes and a surface of the pressed carbon nanotube film is 0° to approximately 15°. The greater the pressure is, the smaller the angle. When the carbon nanotubes in the pressed carbon nanotube film are arranged along different directions, the carbon nanotube structure can be isotropic. The thickness of the pressed carbon nanotube film ranges from about 0.5 nm to about 1 mm.

The carbon nanotubes in the carbon nanotube structure can be selected from a group comprising of single-walled carbon nanotubes (SWCNT), double-walled carbon nanotubes (DWCNT), multi-walled carbon nanotubes (MWCNT), and their mixture. A diameter of the carbon nanotubes approximately ranges from 0.5 nm to 50 nm. A length of the carbon nanotubes is larger than about 10 µm. In the present embodiment, the length ranges from about 100 µm to about 1 millimeter.

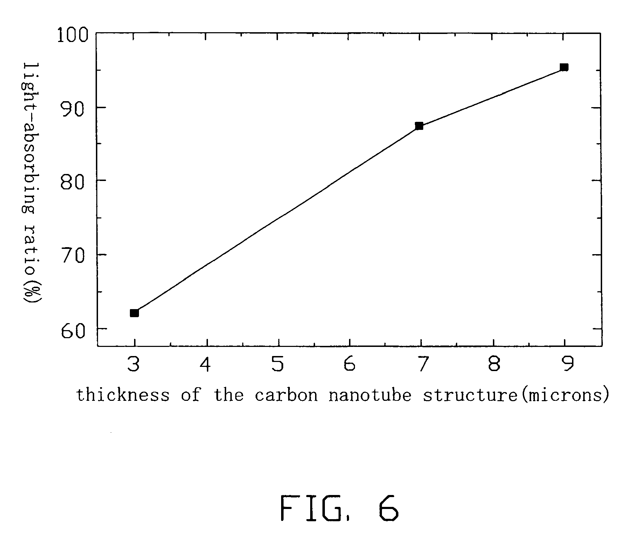

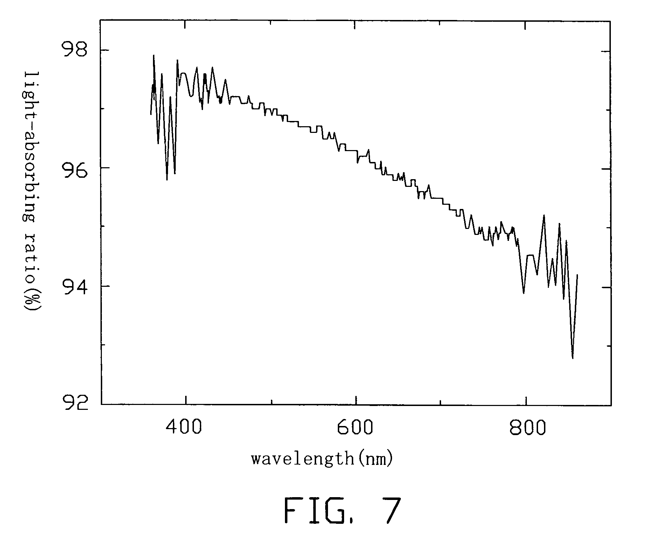

A thickness of the carbon nanotube structure can vary according to the practice. Referring to the Fig.6, the thicker the carbon nanotube structure is, the higher the light-absorbing ratio is. The light-absorbing ratio of the carbon nanotube structure can reach 96% when the thickness thereof is 10 microns. In the present embodiment, the thickness of the carbon nanotube structure is in a range of about 0.2 µm to about 2 mm. Referring to Fig.7, the carbon nanotube structure has a high light-absorbing ratio in the wavelength ranging from about 360 nm to about 800 nm, and the light-absorbing can reach 93%-98% in the wavelength spectrum.

The supporters 15 are configured for increasing the strength of the solar collector 10. The supporters 15 are dispersed in the sealed chamber 16 at random or in a desired pattern. The supporters 15 are spaced from each other and disposed between the substrate 11 and the transparent cover 13. The supporters 15 are made of thermal-insulating materials, such as glass, plastics or rubber. A height of the supporters 15 is the same as that of the sidewall 12 for contacting with the transparent cover 13. The shape of the supporters 15 is not limited, and may be, for example, rounded or bar-shaped.

The solar collector 10 further includes a reflection layer 17. The reflection layer 17 is disposed on the surface 131 of the transparent cover 13. The reflection layer 17 is configured for allowing the visible light and near infrared light of the sunlight passing through the transparent cover 13 and reflecting the far infrared light radiated from the heat-absorbing layer 14 to prevent thermal radiation from escaping the sealed chamber 16. Thus, the light absorbing efficiency of the solar collector 10 is improved. The reflection layer 17 may be an indium tin oxide (ITO) film, a doped zinc oxide film or a titanium dioxide film and a thickness of the reflection layer 17 ranges from about 10 nm to about 1 µm.

The storage apparatus 20 is located on a bottom surface 112 of the substrate 11 and may include a number of pipes (not shown) filled with circulating fluid. The fluid may be selected from the group of water, glycol, or the like.

In use, since the carbon nanotube film is black and has a capability of absorbing most heat of the solar spectrum. The sunlight travels through the transparent cover 13 and reaches the heat-absorbing layer 14. A good portion of the radiation of the sunlight is absorbed by the heat-absorbing layer 14. Then, the heat absorbed by the heat-absorbing layer 14 is conducted to the storage apparatus 20 via the substrate 11. Therefore, the solar collector 10 has a high efficiency because of the excellent light absorbing properties of the carbon nanotubes of the heat-absorbing layer 14. The solar collector 10 is durable due to the toughness of the carbon nanotubes in the carbon nanotube film. The use of carbon nanotube, which does not oxidize easily, eliminated the need for a high vacuum. This significantly reduces the cost of the solar collector 10.

Finally, it is to be understood that the above-described embodiments are intended to illustrate rather than limit the invention. Variations may be made to the embodiments without departing from the scope of the invention as claimed. The above-described embodiments illustrate the scope of the invention but do not restrict the scope of the invention

## Claims

1. A solar collector (10) comprising:
a substrate (11);
a sidewall (12);
a transparent cover (13) disposed on the sidewall, wherein the substrate, the sidewall and the transparent cover being connected with each other to form a sealed chamber; and
a heat-absorbing layer (14) disposed on the substrate, the heat-absorbing layer comprising a carbon nanotube structure_comprising at least one pressed carbon nanotube film, each having a plurality of carbon nanotubes, wherein an angle between a primary alignment direction of the carbon nanotubes and a surface of the carbon nanotube film is about 0 degrees to about 15 degrees and wherein the thickness of the pressed carbon nanotube film ranges from about 0.5 nm to about 1 mm.

2. The solar collector as claimed in claim 1, wherein the carbon nanotube structure comprises a plurality of carbon nanotubes distributed uniformly.

3. The solar collector as claimed in claim 1, wherein the carbon nanotubes are joined with each other by van der Waals attractive force.

4. The solar collector as claimed in claim 1 or 2, wherein the carbon nanotubes are oriented substantially along a same direction.

5. The solar collector as claimed in claim 1 or 2, wherein the carbon nanotubes in the carbon nanotube film are entangled with each other.

6. The solar collector as claimed in claim 1, wherein the carbon nanotube structure comprises two or more stacked carbon nanotube films.

7. The solar collector as claimed in any one of claims 1 to 6, wherein a thickness of the carbon nanotube structure is in a range from about 0.5 µm to about 2mm.

8. The solar collector as claimed in any one of claims 1 to 7, further comprising a reflection layer disposed on a surface of the transparent cover, a thickness of the reflection layer being in a range from about 10 nm to about 1 µm.

9. The solar collector as claimed in claim 8, wherein the reflection layer comprises an indium tin oxide film, a doped zinc oxide film or a titanium dioxide film.

10. The solar collector as claimed in any one of claims 1 to 9, wherein the sealed chamber is an atmospheric chamber.

11. The solar collector as claimed in claim 10, wherein the atmospheric chamber is filled with nitrogen or inert gas.

12. The solar collector as claimed in any one of claims 1 to 11, wherein the sealed chamber is a vacuum chamber.

13. A solar heating system (100) comprising:
a solar collector (10) as claimed in one of claims 1 to 12;
a heat storage apparatus (20) connected to the substrate and configured for storing heat generated by the heat-absorbing layer.

14. The solar heating system as claimed in claim 13, wherein the carbon nanotubes are substantially parallel with a surface of the carbon nanotube film.

## Patentansprüche

1. Ein Solarkollektor (10), der Folgendes beinhaltet:
ein Substrat (11);
eine Seitenwand (12);
eine transparente Abdeckung (13), die auf der Seitenwand angeordnet ist, wobei das Substrat, die Seitenwand und die transparente Abdeckung miteinander verknüpft sind, um eine abgedichtete Kammer zu bilden; und
eine Wärme absorbierende Schicht (14), die auf dem Substrat angeordnet ist, wobei die Wärme absorbierende Schicht eine Kohlenstoffnanoröhrenstruktur beinhaltet, die mindestens einen gepressten Kohlenstoffnanoröhrenfilm beinhaltet, von denen jeder eine Vielzahl von Kohlenstoffnanoröhren aufweist, wobei ein Winkel zwischen einer primären Ausrichtungsrichtung der Kohlenstoffnanoröhren und einer Oberfläche des Kohlenstoffnanoröhrenfilms etwa 0 Grad bis etwa 15 Grad beträgt und wobei die Dicke des gepressten Kohlenstoffnanoröhrenfilms von etwa 0,5 nm bis etwa 1 mm reicht.

2. Solarkollektor gemäß Anspruch 1, wobei die Kohlenstoffnanoröhrenstruktur eine Vielzahl von einheitlich verteilten Kohlenstoffnanoröhren beinhaltet.

3. Solarkollektor gemäß Anspruch 1, wobei die Kohlenstoffnanoröhren durch van-der-Waals-Anziehungskraft miteinander verbunden sind.

4. Solarkollektor gemäß Anspruch 1 oder 2, wobei die Kohlenstoffnanoröhren im Wesentlichen entlang einer gleichen Richtung orientiert sind.

5. Solarkollektor gemäß Anspruch 1 oder 2, wobei die Kohlenstoffnanoröhren in dem Kohlenstoffnanoröhrenfilm miteinander verwickelt sind.

6. Solarkollektor gemäß Anspruch 1, wobei die Kohlenstoffnanoröhrenstruktur zwei oder mehr gestapelte Kolenstoffnanoröhrenfilme beinhaltet.

7. Solarkollektor gemäß einem der Ansprüche 1 bis 6, wobei eine Dicke der Kohlenstoffnanoröhrenstruktur in einem Bereich von etwa 0,5 µm bis etwa 2 mm liegt.

8. Solarkollektor gemäß einem der Ansprüche 1 bis 7, der ferner eine Reflexionsschicht beinhaltet, die auf einer Oberfläche der transparenten Abdeckung angeordnet ist, wobei eine Dicke der Reflexionsschicht in einem Bereich von etwa 10 nm bis etwa 1 µm liegt.

9. Solarkollektor gemäß Anspruch 8, wobei die Reflexionsschicht einen Indiumzinnoxidfilm, einen dotierten Zinkoxidfilm oder einen Titandioxidfilm beinhaltet.

10. Solarkollektor gemäß einem der Ansprüche 1 bis 9, wobei die abgedichtete Kammer eine atmosphärische Kammer ist.

11. Solarkollektor gemäß Anspruch 10, wobei die atmosphärische Kammer mit Stickstoff oder Inertgas gefüllt ist.

12. Solarkollektor gemäß einem der Ansprüche 1 bis 11, wobei die abgedichtete Kammer eine Vakuumkammer ist.

13. Ein Solarheizungssystem (100), das Folgendes beinhaltet:
einen Solarkollektor (10) gemäß einem der Ansprüche 1 bis 12; und
eine Vorrichtung zur Wärmespeicherung (20), die mit dem Substrat verknüpft ist und konfiguriert ist, um durch die Wärme absorbierende Schicht erzeugte Wärme zu speichern.

14. Solarheizungssystem gemäß Anspruch 13, wobei die Kohlenstoffnanoröhren zu einer Oberfläche des Kohlenstoffnanoröhrenfilms im Wesentlichen parallel sind.

## Revendications

1. Un capteur solaire (10) comprenant :
un substrat (11) ;
une paroi latérale (12) ;
un couvercle transparent (13) disposé sur la paroi latérale, dans lequel le substrat, la paroi latérale et le couvercle transparent sont raccordés les uns aux autres pour former une chambre hermétique ; et
une couche absorbant la chaleur (14) disposée sur le substrat, la couche absorbant la chaleur comprenant une structure de nanotubes de carbone comprenant au moins un film de nanotubes de carbone comprimés, chacun ayant une pluralité de nanotubes de carbone, dans lequel un angle entre une direction d'alignement primaire des nanotubes de carbone et une surface du film de nanotubes de carbone est d'environ 0 degré à environ 15 degrés et dans lequel l'épaisseur du film de nanotubes de carbone comprimés va d'environ 0,5 nm à environ 1 mm.

2. Le capteur solaire tel que revendiqué dans la revendication 1, dans lequel la structure de nanotubes de carbone comprend une pluralité de nanotubes de carbone répartis de façon uniforme.

3. Le capteur solaire tel que revendiqué dans la revendication 1, dans lequel les nanotubes de carbone sont joints les uns aux autres par la force d'attraction de van der Waals.

4. Le capteur solaire tel que revendiqué dans la revendication 1 ou la revendication 2, dans lequel les nanotubes de carbone sont orientés substantiellement dans une même direction.

5. Le capteur solaire tel que revendiqué dans la revendication 1 ou la revendication 2, dans lequel les nanotubes de carbone dans le film de nanotubes de carbone sont entremêlés.

6. Le capteur solaire tel que revendiqué dans la revendication 1, dans lequel la structure de nanotubes de carbone comprend deux films ou plus de nanotubes de carbone empilés.

7. Le capteur solaire tel que revendiqué dans l'une quelconque des revendications 1 à 6, dans lequel une épaisseur de la structure de nanotubes de carbone est dans une gamme allant d'environ 0,5 µm à environ 2 mm.

8. Le capteur solaire tel que revendiqué dans l'une quelconque des revendications 1 à 7, comprenant de plus une couche réfléchissante disposée sur une surface du couvercle transparent, une épaisseur de la couche réfléchissante étant dans une gamme allant d'environ 10 nm à environ 1 µm.

9. Le capteur solaire tel que revendiqué dans la revendication 8, dans lequel la couche réfléchissante comprend un film d'oxyde d'étain et d'indium, un film d'oxyde de zinc dopé ou un film de dioxyde de titane.

10. Le capteur solaire tel que revendiqué dans l'une quelconque des revendications 1 à 9, dans lequel la chambre hermétique est une chambre atmosphérique.

11. Le capteur solaire tel que revendiqué dans la revendication 10, dans lequel la chambre atmosphérique est remplie avec de l'azote ou un gaz inerte.

12. Le capteur solaire tel que revendiqué dans l'une quelconque des revendications 1 à 11, dans lequel la chambre hermétique est une chambre à vide.

13. Un système de chauffage solaire (100) comprenant :
un capteur solaire (10) tel que revendiqué dans l'une des revendications 1 à 12 ; et
un appareil de stockage de la chaleur (20) raccordé au substrat et configuré pour stocker de la chaleur générée par la couche absorbant la chaleur.

14. Le système de chauffage solaire tel que revendiqué dans la revendication 13, dans lequel les nanotubes de carbone sont substantiellement parallèles à une surface du film de nanotubes de carbone.
